# EUROPEAN PATENT APPLICATION

(11) **EP 2 194 501 A2**
(43) Date of publication of application: **09.06.2010**
(21) Application number: 09151558.5
(22) Date of filing: 28.01.2009
(51) Int. Cl.: G06Q 30/00

(54) **Method and apparatus for providing advertising moving picture**

(30) Priority: 26.11.2008 KR 20080118391
(71) Applicant: Puzzlecut Co., Ltd, Seongdong-gu Seoul 133-856 (KR); Kim, Tae-ho, Gangnam-gu Seoul 135-080 (KR); Park, Sung-Gil, Seongdong-gu Seoul 133-856 (KR)
(72) Inventor: Kim, Tae-Ho, 135-080, Seoul (KR); Park, Byung-Gil, 133-856, Seoul (KR)
(74) Representative: ABG Patentes, S.L.

(57) **Abstract**

Provided are a method and apparatus for providing an advertising moving picture. According to the method and apparatus, a user searches a list of moving picture clips which are created in advance and directly selects moving picture clips suitable for his (or her) product, arranges the moving picture clips, inputs caption texts to correspond to the moving picture clips, and combines the moving picture clips with background music pieces, so that his (or her) own advertising moving picture can be easily created. In addition, even in case of using the apparatus or method, a user having no advertisement idea may not easily create an advertising moving picture. Such a user can use the advertising moving pictures that are created by other users and modify some portions of the advertising moving pictures to create an advertising moving picture, so that any user can easily create the advertising moving picture. In addition, according to the method and apparatus for providing an advertising moving picture, other users who register advertising contents such as moving picture clips and background music pieces or advertising moving pictures are given some portions of fees that are paid by the user who uses the registered advertising contents or advertising moving pictures, so that various advertising contents can be uploaded and generation of advertising moving pictures can be actively promoted.

## Description

### BACKGROUND OF THE INVENTION

### Field of the Invention

The present invention relates to a method and apparatus for providing advertisement, and more particularly, to a method and apparatus for providing an advertising moving picture.

### Description of the Related Art

Due to development of IT technologies, the Internet has been used as an essential part of modern life. In general, information has been searched among the Internet, and various services have been provided through portal sites

In addition, a sharing rate of the Internet business (such as purchasing and selling products via the Internet) in a total amount of industrial activities has been greatly increased.

According to wide spreading of the Internet uses, companies have generally perform banner advertisement or keyword advertisement at the Internet portal sites as well as the conventional advertisement using newspapers, TVs, and the like.

However, since the banner or keyword advertisement requires for user's active actions, for example, clicking or searching, there is a problem in that the efficiency of the advertisement is not high. In order to solve the problem, in the conventional approaches, advertising moving pictures are played in predetermined regions of the Internet portal sites or the like, so that the users accessing the sites can be exposed to the advertising moving pictures.

However, since the advertising moving pictures need to be created by the advertisement providers and costs for creating and uploading the advertising moving pictures are too high, there is a problem in that small-sized and medium-sized companies cannot stand such a heavy burden for advertisement through the Internet media.

### SUMMARY OF THE INVENTION

The present invention provides a method and apparatus for providing an advertising moving picture that allows users to easily create suitable advertising moving pictures in the Internet environment with low costs.

According to an aspect of the present invention, there is provided a method for providing an advertising moving picture comprising: a step (b) where an apparatus for providing an advertising moving picture arranges a plurality of moving picture clips in an order selected by a user; a step (c) where the apparatus for providing an advertising moving picture arranges at least one of background music pieces and caption texts so as to correspond to the arranged moving picture clips according to user's selection; and a step (d) where the apparatus for providing an advertising moving picture creates an advertising moving picture by combining the arranged moving picture clips with at least one of the background music pieces and the caption texts.

In the above aspect, The method may further comprise, before the step (d), a step (a) where the apparatus for providing an advertising moving picture receives advertising contents including at least one of the moving picture clips and the background music pieces from a plurality of user terminals, generates index information from information representing features of the advertising contents on the basis of categories so as to easily search for the advertising contents, and stores the index information together with the advertising contents.

In addition, in the step (b), the apparatus for providing an advertising moving picture may display either a list of moving picture clips made from searching for a keyword input by the user to the index information or a list of moving picture clips corresponding to a category selected by the user, and arranges the moving picture clips selected by the user in an order selected by the user.

In addition, the method may further comprise a step (e) where, if a fee for creation of the advertising moving picture is paid by the user, the apparatus for providing an advertising moving picture gives some portions of the fee to other users who registered the advertising contents that are used by the user.

In addition, the method may further comprise, after the step (d), a step (f) where the apparatus for providing an advertising moving picture registers the advertising moving picture to an advertising moving picture library so as for other users to use the created advertising moving picture, and in the steps (b) and (c), the apparatus for providing an advertising moving picture may create an advertising moving picture by modifying at least one of moving picture clips, background music pieces, and caption texts included in the advertising moving picture of the other users registered in the step (f) according to user's selection.

According to another aspect of the present invention, there is provided an apparatus for providing an advertising moving picture comprising: a database which stores a plurality of moving picture clips and a plurality of background music pieces; and a moving picture editing unit which arranges a plurality of moving picture clips searched from the database in an order selected by a user, arranges at least one of background music pieces selected by the user and caption texts input by the user so as to correspond to the arranged moving picture clips according to user's selection, and creates an advertising moving picture by combining the arranged moving picture clips with at least one of the background music pieces and the caption texts.

In the above aspect, the apparatus may further comprise a communication unit which receives advertising contents including at least one of the moving picture clips and the background music pieces from a plurality of user terminals and outputs the advertising contents to the database, and the database may classify advertising contents on the basis of categories and generate index information representing features of the advertising contents so as to easily search for the advertising contents, and store the index information together with the advertising contents.

In addition, the moving picture editing unit may display either a list of moving picture clips made from searching for a keyword input by the user to the index information or a list of moving picture clips corresponding to a category selected by the user, and arrange the moving picture clips selected by the user in an order selected by the user.

In addition, the apparatus may further comprise a fee processing unit which outputs to the user terminal a fee of creating the advertising moving picture and gives some portions of the fee to other users who registered the advertising moving picture used by the user if the fee is paid by the user.

In addition, the moving picture editing unit may register the advertising moving picture to an advertising moving picture library of the database so as for other users to use the created advertising moving picture according to user's selection, and the moving picture editing unit may create an advertising moving picture by modifying at least one of moving picture clips, background music pieces, and caption texts included in the advertising moving picture of the other users registered in the advertising moving picture library according to user's selection.

According to the present invention, a user searches a list of moving picture clips which are created in advance and directly selects moving picture clips suitable for his (or her) product, arranges the moving picture clips, inputs caption texts to correspond to the moving picture clips, and combines the moving picture clips with background music pieces, so that his (or her) own advertising moving picture can be easily created.

Even in case of using the method and apparatus for providing an advertising moving picture according to the present invention, a user having no advertisement idea may easily create an advertising moving picture. Such a user can use the advertising moving pictures that are created by other users and modify some portions of the advertising moving pictures to create an advertising moving picture, so that any user can easily create the advertising moving picture.

In addition, according to the present invention, other users who register advertising contents such as moving picture clips and background music pieces or advertising moving pictures are given some portions of fees that are paid by the user who uses the registered advertising contents or advertising moving pictures, so that various advertising contents can be uploaded and generation of advertising moving pictures can be actively promoted.

### BRIEF DESCRIPTION OF THE DRAWINGS

The above and other features and advantages of the present invention will become more apparent by describing in detail exemplary embodiments thereof with reference to the attached drawings in which:
Fig. 1 is a view showing the entire configuration where an advertising moving picture providing apparatus according to an embodiment of the present invention is connected to user terminals via a wire/wireless communication network such as the Internet;
Fig. 2 is a block diagram showing a construction of an advertising moving picture providing apparatus according to an embodiment of the present invention;
Fig. 3 is a flowchart showing a contents uploading step according to an embodiment of the present invention;
Figs. 4a and 4b are flowcharts showing advertising moving picture creating and purchasing step s according to an embodiment of the present invention;
Figs. 5a and 5b are detailed flowcharts showing an advertising moving picture editing step according to an embodiment of the present invention; and
Figs. 6a to 6i are views for explaining steps of the advertising moving picture editing step according to an embodiment of the present invention.

### DETAILED DESCRIPTION OF THE INVENTION

Hereinafter, exemplary embodiments of the present invention will be described in detail with reference to the attached drawings.

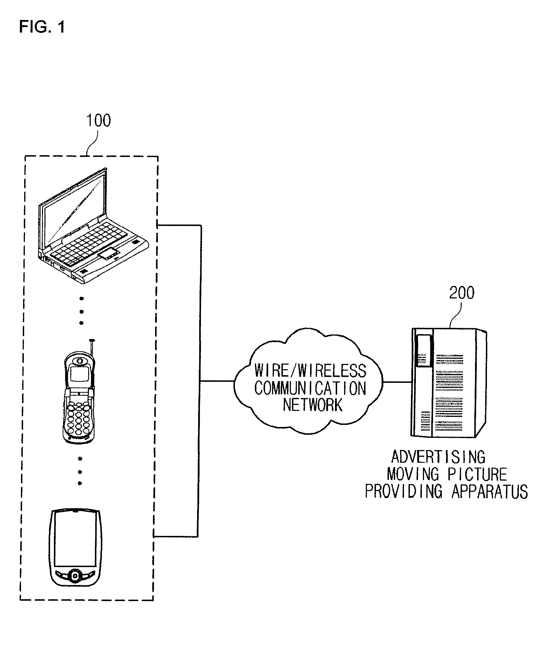

Fig. 1 is a view showing the entire configuration where an advertising moving picture providing apparatus according to an embodiment of the present invention is connected to user terminals via a wire/wireless communication network such as the Internet.

Referring to Fig. 1, the advertising moving picture providing apparatus 200 is connected to a plurality of user terminals 100 via a wire/wireless communication network.

The advertising moving picture providing apparatus 200 stores contents used to create an advertising moving picture (hereinafter, referred to as advertising contents). The advertising contents includes a plurality of moving picture clips, background music pieces, effect sounds, and so on. The advertising moving picture providing apparatus 200 provides moving picture editing functions to user terminals 100 connected thereto via the wire/wireless communication network. The advertising moving picture providing apparatus 200 creates an advertising moving picture by combining moving picture clips and inserting background music pieces, effect sounds, texts, and so on according to editing commands received from the user terminals 100. The advertising moving picture providing apparatus 200 stores the created advertising moving picture and provides the advertising moving picture to users.

The advertising moving picture providing apparatus 200 registers advertising contents uploaded by users and advertising moving pictures created by users to a library so as for other users to use the advertising contents or the advertising moving pictures. When other users use the advertising contents or the advertising moving pictures, the advertising moving picture providing apparatus 200 pays a predetermined fee to the users who create the advertising contents or the advertising moving pictures.

The user terminal 100 accesses the advertising moving picture providing apparatus 200 and uses the moving picture editing functions provided by the advertising moving picture providing apparatus 200 to arrange moving picture clips suitable for a to-be-advertised product and arrange background music pieces, advertising phrase texts, effect sounds, and so on so as to correspond to the moving picture clips, and create an advertising moving picture by combining the arranged moving picture clips with the background music pieces, the advertising phrase texts, the effect sounds, and so on.

The user terminal 100 accesses the advertising moving picture providing apparatus 200 to create an advertising moving picture by modifying parts of the advertising moving pictures previously created by other users.

When other users use the advertising contents (for example, moving picture clips, background music pieces, and effect sounds) that are created and uploaded to the advertising moving picture providing apparatus 200 by the user terminal 100 or the advertising moving pictures that are edited and created by the user terminal 100, the user terminal 100 can be given predetermined fees. In this case, the user becomes a contents seller.

If the user terminals 100 can access the advertising moving picture providing apparatus 200 via wire/wireless communication network, implementation types thereof are not limited. The user terminals 100 may be implemented as mobile phones, computers, PDAs, or other various electronic apparatuses.

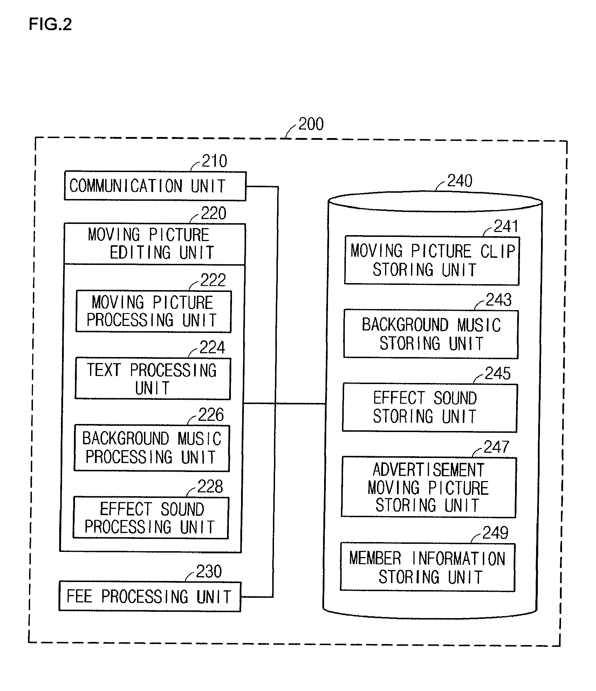

Fig. 2 is a block diagram showing a construction of an advertising moving picture providing apparatus according to an embodiment of the present invention. Referring to Fig. 2, the advertising moving picture providing apparatus 200 includes a communication unit 210, a moving picture editing unit 220, a fee processing unit 230, and a database 240.

The moving picture editing unit 220 includes a moving picture processing unit 222, a text processing unit 224, a background music processing unit 226, and an effect sound processing unit 228.

The database 240 includes a moving picture clip storing unit 241, a background music storing unit 243, an effect sound storing unit 245, an advertising moving picture storing unit 247, and a member information storing unit 249.

Firstly, the communication unit 210 communicates with the user terminal 100 that access the advertising moving picture providing apparatus 200 via a wire/wireless communication network. Next, the communication unit 210 verifies a user and transmits to the user terminal 100 an editing page for providing an advertising moving picture editing functions according to the present invention. In addition, the communication unit 210 provides to the moving picture editing unit 220 editing commands that are received from the user terminal 100. In addition, the communication unit 210 outputs and stores to the database 240 the moving picture clips that are received from the user terminal 100 and transmits completed advertising moving pictures to the user terminal 100.

The moving picture processing unit 222 of the moving picture editing unit 220 displays on the user terminal 100 the moving picture clips stored in the moving picture clip storing unit 241 scene by scene and arranges the moving picture clips selected by the user terminal 100 at positions selected by the user terminal 100. Next, when the arrangement of the moving picture clips is completed and the later-described advertising phrases, texts, background music pieces, effect sounds, and the like are arranged so as to corresponding to the moving picture clips, the advertising moving picture is created by combining the moving picture clips with the advertising phrases, texts, background music pieces, effect sound, and the like.

The text processing unit 224 receives timing information and text information from the user terminal 100 and arranges the advertising phrases and texts to correspond to the moving picture clips at the timing designated by the user.

The background music processing unit 226 receives timing information and background music selecting information from the user terminal 100 and arranges the background music pieces that are to be output together with the advertising moving picture to correspond to the moving picture clips at the timing designated by the user. Only one background music piece may be used in the advertising moving picture. In addition, two or more background music pieces may be used in the advertising moving picture.

The effect sound processing unit 228 receives timing information and effect sound selecting information from the user terminal 100 and arranges the effect sounds to the correspond to the moving picture clips at the timing designated by the user.

The fee processing unit 230 charges the user the fee for the creation of the advertising moving picture. Various methods of fee calculation may be adapted. In the simplest method, a fee for one advertising moving picture may be charged by a fixed amount. In another method, a sum of fees for advertising contents used by the user may be charged. In still another method, the fee may be charged according to the number of the moving picture clips and the number of the background music pieces used for creating the advertising moving picture.

Some portions of the fee that is paid by the user are given to other users who create the advertising contents or the advertising moving pictures used by the user.

The moving picture clip storing unit 241 of the database 240 registers and stores in a contents library the ready-made moving picture clips that are created in advance by the manager of the advertising moving picture providing apparatus 200 and the moving picture clips that are directly created by users.

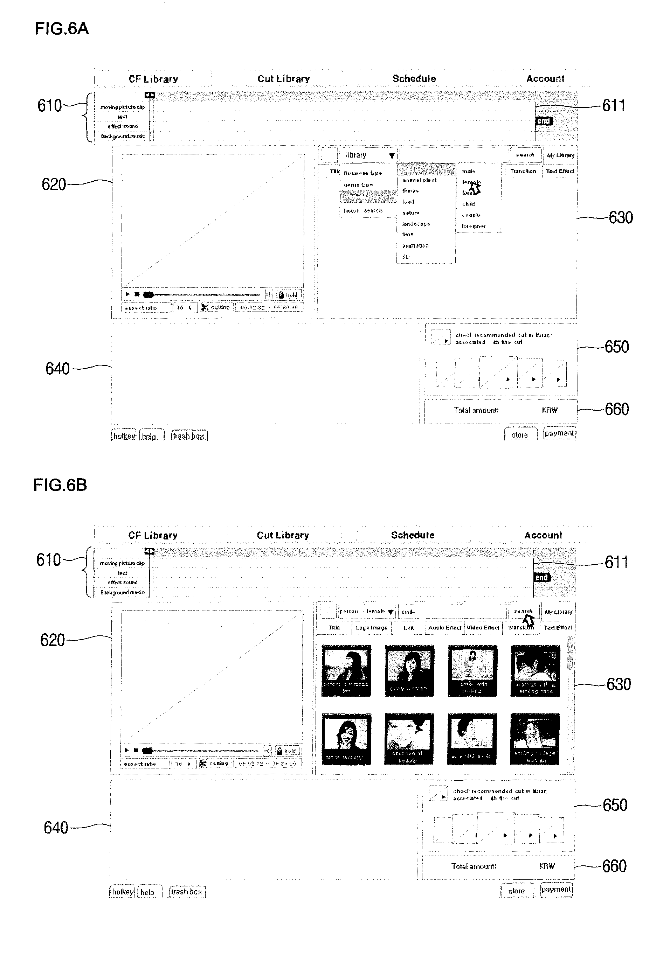

In the registration of the moving picture clips, the moving picture clip storing unit 241 classifies the moving picture clips according to broad categories such as business type, genre, and material and narrow categories. In an example shown in Fig. 6a, the moving picture clips may be classified according to PERSON, ANIMAL, THINGS, FOOD, NATURE, LANDSCAPE, TIME, ANIMATION, 3D, and the like that are narrow categories of the broad category of MATERIAL. Furthermore, the moving picture clips may be classified and registered according to MALE, FEMALE, FAMILY, COUPLE, FOREIGNER, and the like that are sub-categories of the narrow category PERSON.

In addition, the moving picture clip storing unit 241 stores the moving picture clips together with indices for explaining contents and features of the moving picture clips so as for users to easily search for the moving picture clips.

Similarly to the moving picture clip storing unit 241, the background music storing unit 243 and the effect sound storing unit 245 register and store in the contents library the ready-made background music pieces and effect sounds that are created in advance and the moving picture clips that are uploaded by users. In addition, indices for the background music pieces and effect sounds may also be generated, and the background music pieces and the effect sounds may be stored together with the indices.

The advertising moving picture storing unit 247 stores advertising moving pictures that are created by users. The advertising moving pictures may be stored together with indices in the advertising moving picture storing unit 247. In this case, some of the advertising moving pictures can be registered and stored together with the indices in the advertising moving picture library only if the user who creates the advertising moving picture permits other users to use the advertising moving picture. The advertising moving picture registered in the advertising moving picture library can be searched by using keywords.

The member information storing unit 249 stores basic information and log-in information of members who subscribe the advertising moving picture providing service. The member information storing unit 249 also stores lists of moving picture clips and advertising moving pictures which are uploaded by the members.

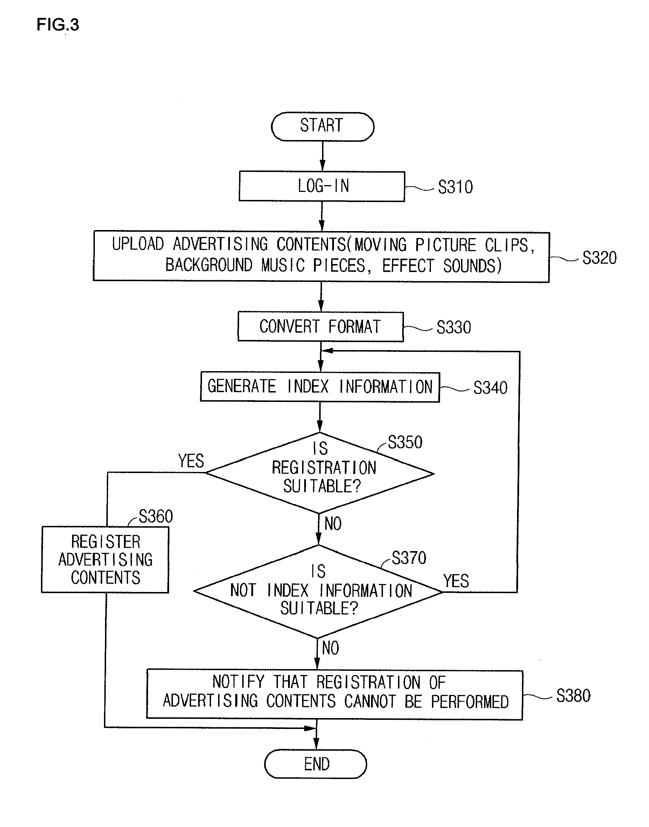

Hereinbefore, components of the advertising moving picture providing apparatus 200 according to the present invention and functions thereof are described. The above-described functions of the components of the advertising moving picture providing apparatus 200 will be described in detail by an advertising moving picture providing method with reference to Figs. 3 to 6h.

The method according to the present invention includes a contents registering step and advertising moving picture creating and purchasing steps. These procedures can be independently performed. In the contents registering step, the advertising contents such as moving picture clips, background music pieces, or effect sounds used to create advertising moving pictures can be registered by a manager of the advertising moving picture providing apparatus 200 or users who are to sell contents created by the users.

In addition, in the advertising moving picture creating and purchasing steps, the users may purchase the advertising moving pictures by creating the advertising moving pictures by editing the advertising contents registered in a contents library and performing payment. In addition, the users may purchase the advertising moving pictures by modifying advertising moving pictures which are previously registered in an advertising moving picture library by other users.

Fig. 3 is a flowchart showing a contents uploading step according to an embodiment of the present invention. A step where a user uploads advertising contents will be described with reference to Fig. 3. Firstly, a user terminal 100 access the advertising moving picture providing apparatus 200 according to the present invention, and the user inputs log-in information such as ID and password to perform log-in (S310).

When the log-in is completed, the user terminal 100 uploads to the advertising moving picture providing apparatus 200 the advertising contents such as moving picture clips, background music pieces, and effect sounds stored in the user terminal 100 (S320). The advertising moving picture providing apparatus 200 converts various formats of the advertising contents to the same format (S330).

The advertising moving picture providing apparatus 200 generates indices for the converted advertising contents (S340). The index information may include playing time, tag, category, symbolical features (color, brightness, dynamic elements, and the like) of the advertising contents. In order to facilitate effective searching in the moving picture editing step, the index information may include information for expressing features of the advertising contents according to various categories.

After the index information is generated, the advertising moving picture providing apparatus 200 determines suitableness of registration by checking whether or not the advertising contents have technical defects (for example, failure in reduction of some portions of advertising contents) or content defects (for example, calumniation of a specific person, or obscenities) (S350). If the advertising contents are determined to have the suitableness of registration, the advertising moving picture providing apparatus 200 registers the advertising contents in the contents library and stores in the database 240 (S360).

As a result of the checking in the step S350, if the advertising contents are determined not to have the suitableness of registration, the advertising moving picture providing apparatus 200 further checks whether or not the unsuitableness of registration is caused from an erroneous generation of index. If the index is determined to be erroneously generated, the procedure returns to the step S340 so as to generate the index again (S370).

If the unsuitableness of registration is determined not to be caused from the erroneous generation of index, it is notified that the registration of advertising contents cannot be performed, and the contents registering step is ended (S380).

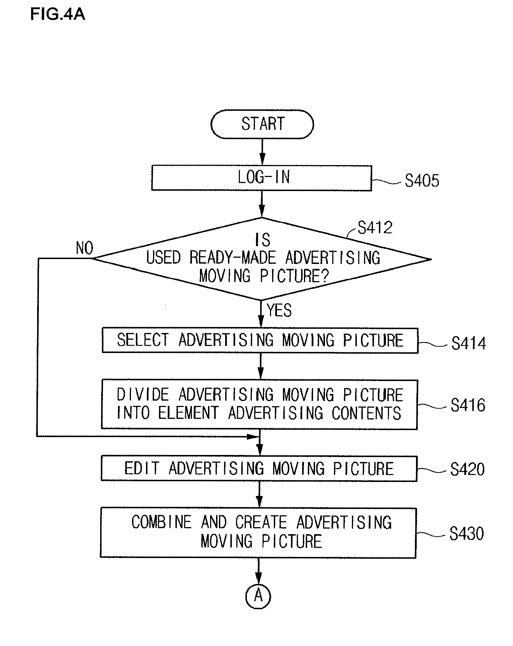

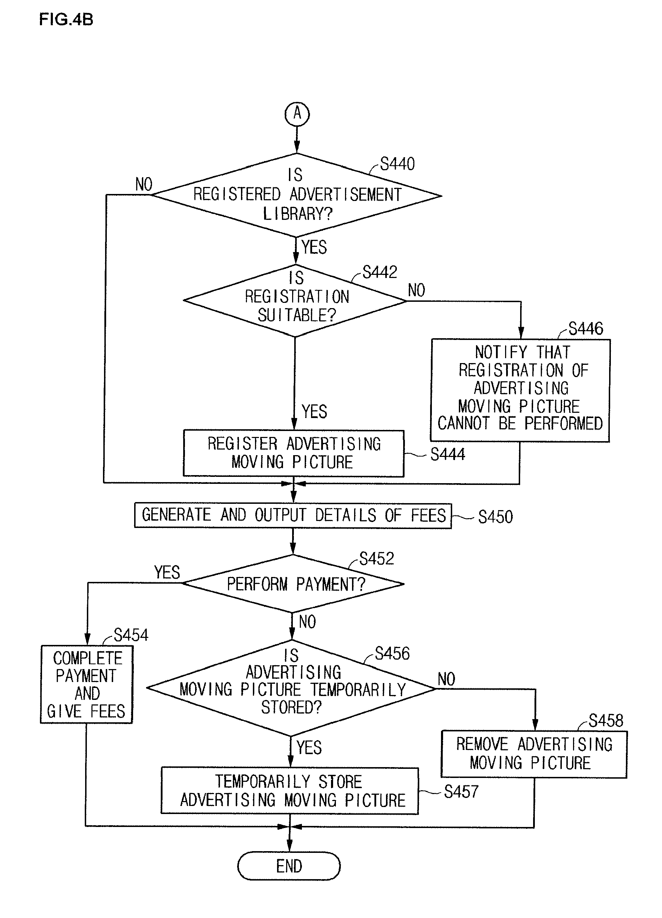

Figs. 4a and 4b are flowcharts showing advertising moving picture creating and purchasing steps according to an embodiment of the present invention. Referring to Figs. 4a and 4b, a user who desires to purchase an advertising moving picture inputs ID and password to perform log-in (S405). In a main menu displayed on the user terminal 100, the user selects the using of ready-made advertising moving pictures or not (S412). If the user does not use the ready-made advertising moving pictures, the procedure proceeds to the step S420.

If the user selects the using of the ready-made advertising moving pictures, the advertising moving picture providing apparatus 200 receives from the user terminal 100 keywords associated with the advertising moving picture that is to be used by the user. The advertising moving picture providing apparatus 200 searches for the index of the ready-made advertising moving picture registered in the advertising moving picture library and displays on the user terminal 100 a list of advertising moving pictures corresponding to the keyword. The user selects the to-be-used advertising moving picture from the list of advertising moving pictures (S414).

In the step S414, the user may select a classification of the advertising moving picture, so that the user can search for and select advertising moving pictures which are classified in advance according to various categories such as product, advertising target, and advertising area.

The advertising moving picture providing apparatus 200 divides the advertising moving picture selected by the user into a plurality of element contents (moving picture clips, background music pieces, effect sounds, and the like) and displays the contents on the user terminal 100 (S416).

Next, in the case where the user uses the ready-made advertising moving picture, the user uses the moving picture editing functions provided by the advertising moving picture providing apparatus 200 to modify the ready-made advertising moving picture so as to create his(or her) own advertising moving picture; and in the case where the user does not uses the ready-made advertising moving picture, the user uses the moving picture editing functions to select the moving picture clips, the background music pieces, the effect sounds, and the like so as to directly create his(or her) own advertising moving picture (S420).

When the editing of the moving picture is completed, the advertising moving picture providing apparatus 200 creates an advertising moving picture by combining the contents included in the edited advertising moving picture (S430). Next, the advertising moving picture providing apparatus 200 inquires whether or not the user registers the advertising moving picture in an advertising library so as for other users to use the advertising moving picture (S440).

In a case where the user desires to register the advertising moving picture in the advertising library, the advertising moving picture providing apparatus 200 determines suitableness of registration in the same manner as that of the aforementioned step S350 (S442). If the advertising moving picture is determined to have the suitableness of registration, the advertising moving picture providing apparatus 200 registers the advertising moving picture in the advertising library (S444). If the advertising moving picture is determined not to have unsuitableness of registration, it is notified to the user terminal 100 that the registration cannot be performed (S446).

Next, the advertising moving picture providing apparatus 200 generates a bill of fee for creation of the advertising moving picture and outputs the bill of fee to the user terminal (S450). The advertising moving picture providing apparatus 200 inquires whether or not the user performs payment of the fee (S452).

If the user selects the fee payment, the advertising moving picture providing apparatus 200 transmits a fee payment page to the user terminal 100 so as for the user to perform the payment of the fee. Next, the advertising moving picture providing apparatus 200 gives some portions of the paid fee to other users who registered advertising moving picture used for creation of the advertising moving picture and other users who registered advertising contents included in the advertising moving picture (S454).

If the user does not select the fee payment, the advertising moving picture providing apparatus 200 inquires whether or not the user temporarily stores the created advertising moving picture (S456). If the user selects the temporary storing, the advertising moving picture providing apparatus 200 temporarily stores the advertising moving picture in a database 240 so as for the user to perform the payment of the fee later (S457). If the user does not select the temporary storing, the advertising moving picture providing apparatus 200 removes the advertising moving picture created by the user.

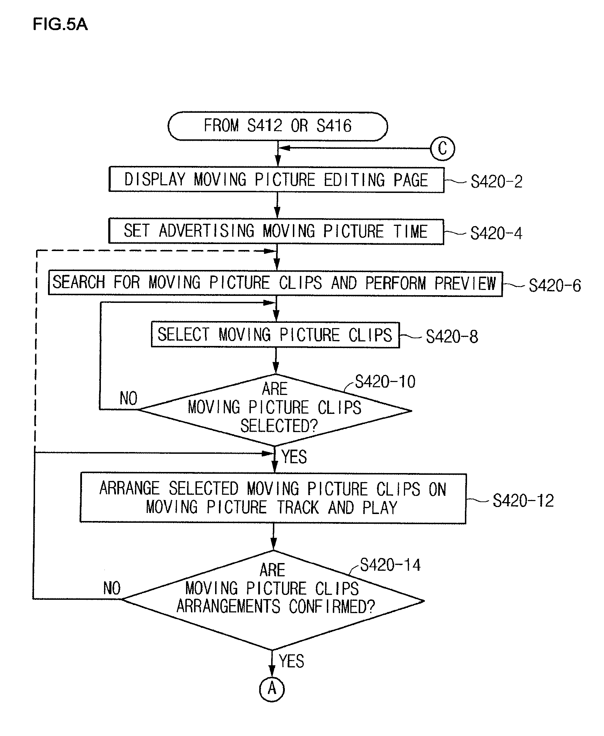

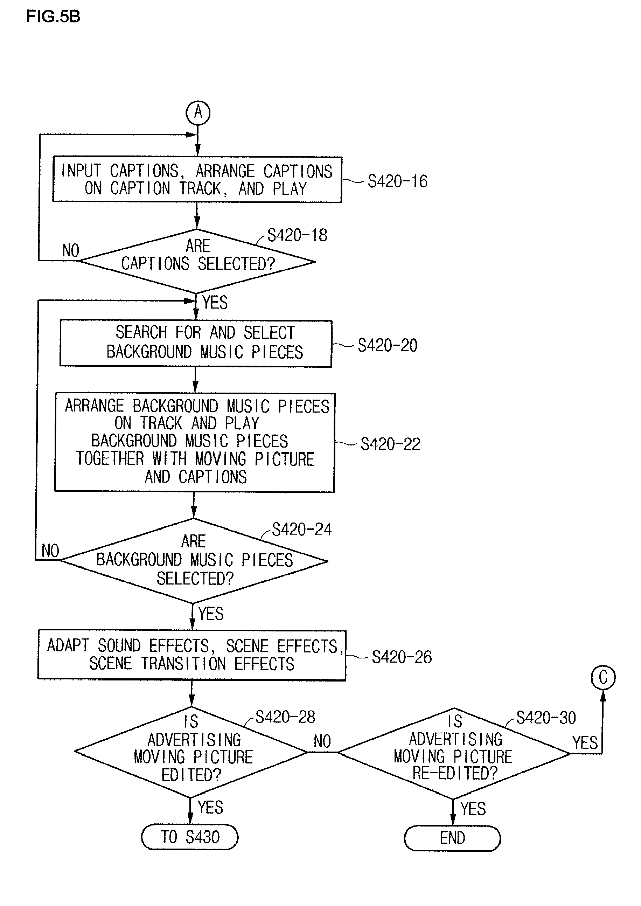

Figs. 5a and 5b are detailed flowcharts showing the advertising moving picture editing step S420 shown in Fig. 4a. Figs. 6a to 6i are views for explaining steps of the advertising moving picture editing step according to an embodiment of the present invention. The advertising moving picture editing step (S420) where a user directly edits the advertising moving picture will be described with reference to Figs. 5a to 6h.

Firstly, as shown in Fig. 6a, the advertising moving picture providing apparatus 200 displays a moving picture editing page on a user terminal 100 so as for the user to perform advertising moving picture editing (S420-2).

The moving picture editing page includes a track arrangement adjusting region 610, a moving picture playing region 620, a contents selecting region 630, a representative image display region 640, an associated moving picture clip display region 650, and a payment amount display region 660.

The track arrangement adjusting region 610 is a region where the user can check and adjust the arrangement of moving picture clips, texts, background music pieces, effect sounds, and the like which are selected by the user. The moving picture playing region 620 is a region where the moving picture clips selected by the user and the advertising moving picture are displayed. The contents selecting region 630 is a region where a list of contents constituting the advertising moving pictures, for example, the moving picture clips, the background music pieces, the effect sounds, the texts, and the like can be displayed, selected, and modified. The representative image display region 640 is a region where representative images of the arranged moving picture clips are sequentially display. The associated moving picture clip display region 650 is a region where moving picture clips similar to the moving picture clips selected by the user are displayed so as for the user to easily select the moving picture clips. The payment amount display region 660 is a region where a payment amount for the created advertising moving pictures is displayed.

When the moving picture editing page is displayed, the advertising moving picture providing apparatus 200 sets a time of the advertising moving picture received from the user terminal 100 and the set time 611 is displayed on the track arrangement adjusting region 610 (S420-4).

Next, the user searches for the moving picture clips and performs preview (S420-6). As shown in Fig. 6a, the searching for the moving picture clips may be performed by selecting the moving picture clips one-by-one from upper category to lower category in the prepared menu bar. In addition, as shown in Fig. 6b, the searching for the moving picture clips may be performed by searching for keywords input by the user in indices.

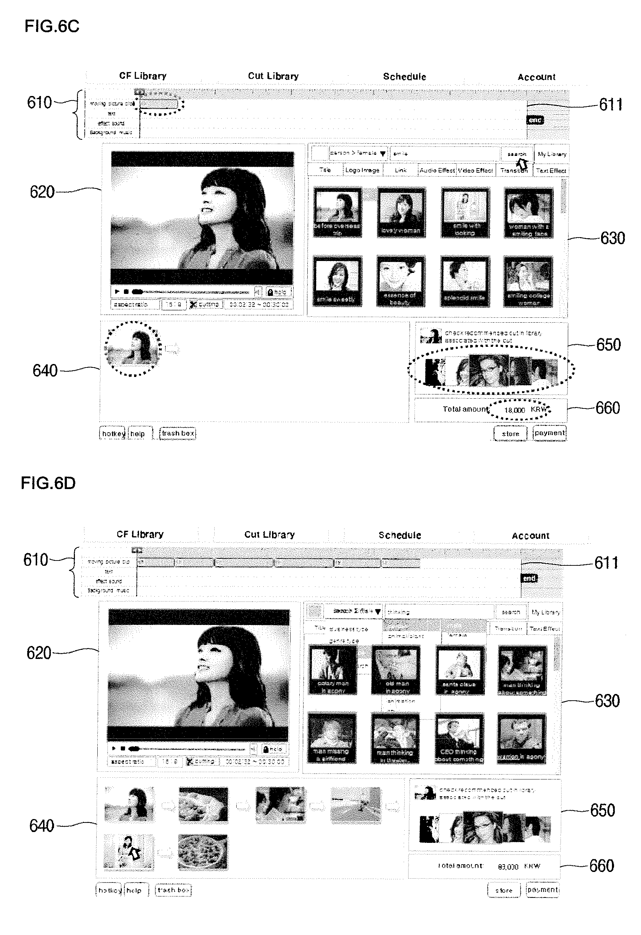

If the user selects any one of the searched moving picture clips, as shown in Fig. 6c, the selected moving picture clips are displayed with a bar shape on the track arrangement adjusting region 610 by a playing time of the moving picture, and the representative images of the selected moving picture clips are displayed on the representative image display region (S420-8). At this time, the user can change the order of the moving picture clips on the moving picture track.

As shown in Fig. 6d, until the advertising moving picture time set by the user is entirely filled, the aforementioned step (S420-8) is repetitively performed (S420-10).

When the selection of moving picture clips is completed, the advertising moving picture providing apparatus 200 arranges the selected moving picture clips on the video track and plays the entire moving picture clips (S420-12). If the user is not satisfied with the arrangement of the moving picture clips, the procedure proceeds to the step S420-12 so as to re-arrange the moving picture clips. In addition, according to user's selection, the procedure may proceed to the step S420-6 so as to perform the entire steps from the moving picture clip selecting step (S420-14).

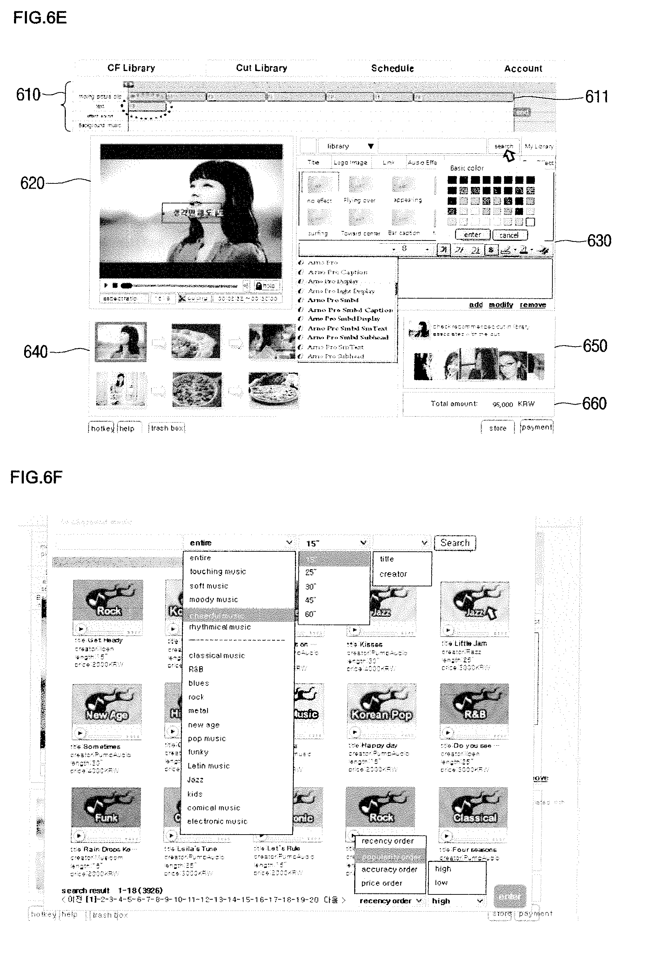

If the user is satisfied with the arrangement of the moving picture clips and confirms the arranges, as shown in Fig. 6e, the advertising moving picture providing apparatus 200 receives caption texts which are to be inserted and arranges the caption texts on the caption track so as to play the advertising moving picture including captions (S420-16).

Until the user completes selecting the captions, the advertising moving picture providing apparatus 200 repetitively performs the step S420-16 (S420-18).

As shown in Fig. 6f, if the caption is confirmed, the user searches for background music pieces or others music files used for the advertising moving picture and performs pre-listening to select desired music file (S420-20).

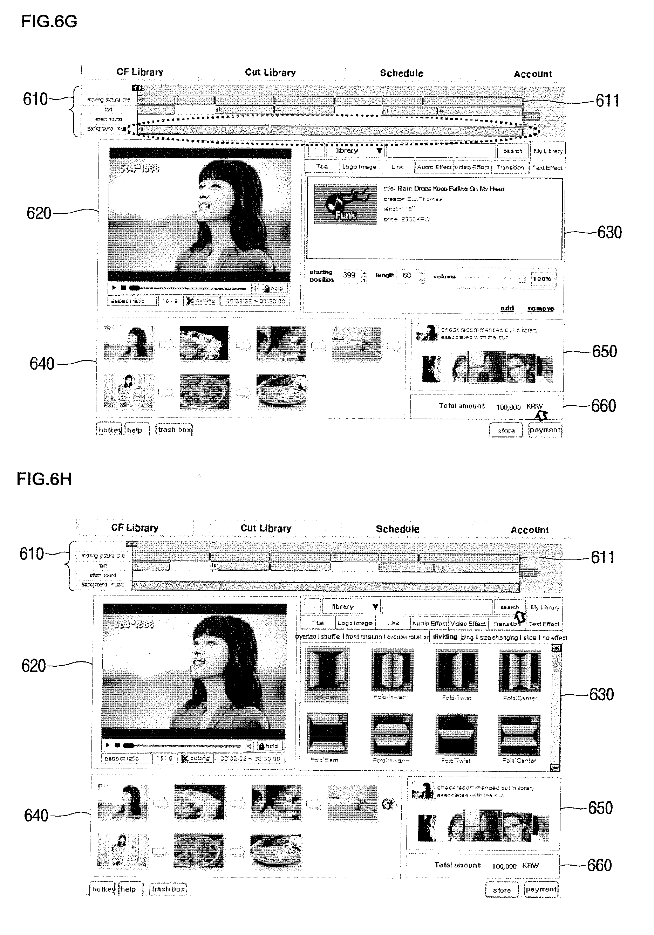

Next, as shown in Fig. 6g, the advertising moving picture providing apparatus 200 adjusts starting positions, lengths, and volumes of the background music pieces selected by the user to arrange the background music pieces on the track and plays the advertising moving picture and the captions together with the background music pieces (S420-22). Until the user completely selects the background music pieces, the advertising moving picture providing apparatus 200 repetitively performs the steps S420-20 and the step S420-22 (S420-24).

When the background music pieces are completely selected, the advertising moving picture providing apparatus 200 adapts to the currently-created advertising moving picture various sound effects, screen effect, and scene transition effects selected by the user (S420-26). The sound effects are functions of adjusting effect sounds including narration and the like or volumes. The screen effects are functions of adapting various visual effects to the moving picture clips. As an example of the screen effects, various filter components as layers on the moving picture clips are used to change visual effects. As shown in Fig. 6h, the scene transition effects are functions of smoothly processing scene changing sections between the moving picture clips when a plurality of the moving picture clips are sequentially played. Well-known fade-in/fade-out effects are the example of the scene transition effects.

The advertising moving picture providing apparatus 200 plays the created advertising moving picture and receives user's input of edit completion; and when the editing of the advertising moving picture is completed, the procedure proceeds to the step S430 (S420-28). If the editing of the advertising moving picture is not completed, the advertising moving picture providing apparatus 200 inquires whether or not the user re-edits the advertising moving picture; and when the user selects the re-editing, the procedure proceeds to the step S420-2.

Hereinbefore, the step S420 where the user directly edits the advertising moving picture is described.

In a case where, the user decides to create an advertising moving picture by modifying the advertising moving pictures that were created as shown in Figs. 6a to 6h and registered by other users in the step S412, the advertising moving picture editing page shown in Fig. 6h is displayed on the user terminal 100.

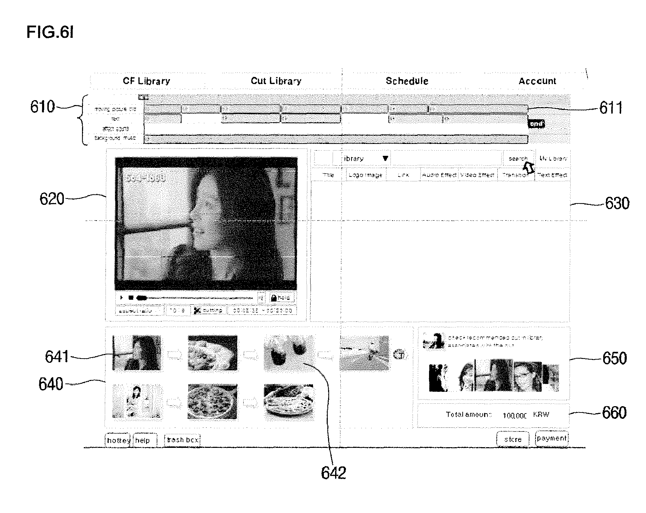

The user modifies some portions of the element contents (moving picture clips, background music pieces, effect sounds, and the like) of the advertising moving pictures that were created by other users to create a his (or her) own desired advertising moving picture. An example where the user modifies the fist moving picture clip 641 and the third moving picture clip 642 of the advertising moving picture (shown in Fig. 6h) that were created by other users is shown in Fig. 6i. Beside the moving picture clips, the caption texts, the background music pieces, or the like may also be modified.

Hereinbefore, the advertising moving picture providing methods according to the preferred embodiments of the present invention are described. Although the advertising moving picture providing apparatus 200 according to the preferred embodiments is described to be used in an environment where a plurality of the user terminals 100 access the advertising moving picture providing apparatus 200, the advertising moving picture providing apparatus 200 may be implemented as software installed in a user's computer, so that the advertising moving picture providing apparatus 200 may directly receive inputs of commands to create the advertising moving picture

The invention can also be embodied as computer readable codes on a computer readable recording medium. The computer readable recording medium is any data storage device that can store data which can be thereafter read by a computer system. Examples of the computer readable recording medium include read-only memory (ROM), random-access memory (RAM), CD-ROMs, magnetic tapes, floppy disks, optical data storage devices, and carrier waves (such as data transmission through the Internet). The computer readable recording medium can also be distributed over network coupled computer systems so that the computer readable code is stored and executed in a distributed fashion.

While the present invention has been particularly shown and described with reference to exemplary embodiments thereof, it will be understood by those skilled in the art that various changes in form and details may be made therein without departing from the spirit and scope of the present invention as defined by the appended claims.

## Claims

1. A method for providing an advertising moving picture comprising:
a step (b) where an advertising moving picture providing apparatus arranges a plurality of moving picture clips in an order selected by a user;
a step (c) where the advertising moving picture providing apparatus arranges at least one of background music pieces and caption texts so as to correspond to the arranged moving picture clips according to user's selection; and
a step (d) where the advertising moving picture providing apparatus creates an advertising moving picture by combining the arranged moving picture clips with at least one of the background music pieces and the caption texts.

2. The method according to claim 1, further comprising, before the step (b), a step (a) where the advertising moving picture providing apparatus receives advertising contents including at least one of the moving picture clips and the background music pieces from a plurality of user terminals, generates index information from information representing features of the advertising contents on the basis of categories so as to easily search for the advertising contents, and stores the index information together with the advertising contents.

3. The method according to claim 2, wherein, in the step (b), the advertising moving picture providing apparatus displays either a list of moving picture clips made from searching for a keyword input by the user to the index information or a list of moving picture clips corresponding to a category selected by the user, and arranges the moving picture clips selected by the user in an order selected by the user.

4. The method according to claim 2, further comprising a step (e) where, if a fee for creation of the advertising moving picture is paid by the user, the advertising moving picture providing apparatus gives some portions of the fee to other users who registered the advertising contents that are used by the user.

5. The method according to claim 1, further comprising, after the step (d), a step (f) where the advertising moving picture providing apparatus registers the advertising moving picture to an advertising moving picture library so as for other users to use the created advertising moving picture,
wherein, in the steps (b) and (c), the advertising moving picture providing apparatus creates an advertising moving picture by modifying at least one of moving picture clips, background music pieces, and caption texts included in the advertising moving picture of the other users registered in the step (f) according to user's selection.

6. A computer-readable medium having embodied thereon a computer program for the method of any one of claims 1 to 5.

7. An apparatus for providing an advertising moving picture comprising:
a database which stores a plurality of moving picture clips and a plurality of background music pieces; and
a moving picture editing unit which arranges a plurality of moving picture clips searched from the database in an order selected by a user, arranges at least one of background music pieces selected by the user and caption texts input by the user so as to correspond to the arranged moving picture clips according to user's selection, and creates an advertising moving picture by combining the arranged moving picture clips with at least one of the background music pieces and the caption texts.

8. The apparatus according to claim 7, further comprising a communication unit which receives advertising contents including at least one of the moving picture clips and the background music pieces from a plurality of user terminals and outputs the advertising contents to the database,
wherein the database classifies advertising contents on the basis of categories and generates index information representing features of the advertising contents so as to easily search for the advertising contents, and stores the index information together with the advertising contents.

9. The apparatus according to claim 8, wherein the moving picture editing unit displays either a list of moving picture clips made from searching for a keyword input by the user to the index information or a list of moving picture clips corresponding to a category selected by the user, and arranges the moving picture clips selected by the user in an order selected by the user.

10. The apparatus according to claim 8, further comprising a fee processing unit which outputs to the user terminal a fee of creating the advertising moving picture and gives some portions of the fee to other users who registered the advertising moving picture used by the user if the fee is paid by the user.

11. The apparatus according to claim 7,
wherein the moving picture editing unit registers the advertising moving picture to an advertising moving picture library of the database so as for other users to use the created advertising moving picture according to user's selection, and
wherein the moving picture editing unit creates an advertising moving picture by modifying at least one of moving picture clips, background music pieces, and caption texts included in the advertising moving picture of the other users registered in the advertising moving picture library according to user's selection.
